# EUROPÄISCHE PATENTSCHRIFT

(11) **EP 2 821 756 B1**
(45) Veröffentlichungstag und Bekanntmachung des Hinweises auf die Patenterteilung: **05.07.2023**
(21) Anmeldenummer: 14001802.9
(22) Anmeldetag: 22.05.2014
(51) Int. Cl.: G01F 1/60, G01N 27/08

(54) **Magnetisch-induktives Durchflussmessgerät und Verfahren zum Betreiben eines magnetisch-induktiven Durchflussmessgeräts**
Magnetic-inductive flow measuring apparatus and method for operating a magnetic-inductive flow measuring apparatus
Débitmètre à induction magnétique, et procédé de fonctionnement d'un débitmètre à induction magnétique

(30) Priorität: 01.07.2013 DE 102013010891
(43) Veröffentlichungstag der Anmeldung: 07.01.2015
(73) Patentinhaber: Krohne Messtechnik GmbH, 47058 Duisburg (DE)
(72) Erfinder: Dr. Helmut Brockhaus, 46145 Oberhausen (DE); Wilhelm Florin, 47198 Duisburg (DE)
(74) Vertreter: Gesthuysen Patentanwälte

(56) Entgegenhaltungen:
- EP-A1- 0 336 615
- EP-A2- 0 704 682
- DE-T2- 69 232 633
- JP-A- H07 248 240
- JP-A- 2002 310 750
- JP-A- 2004 219 372
- US-A1- 2008 016 967

## Beschreibung

Die Erfindung betrifft ein magnetisch-induktives Durchflussmessgerät und ein Verfahren zum Betreiben eines magnetisch-induktiven Durchflussmessgeräts.

Gegenstand der Erfindung ist also zunächst ein magnetisch-induktives Durchflussmessgerät, mit mindestens einem Messrohr für den Durchfluss eines elektrisch leitenden Mediums, mit mindestens einer Magnetfelderzeugungseinrichtung zur Erzeugung eines zumindest auch senkrecht zur Längsachse des Messrohrs verlaufenden wechselnden Magnetfeldes, mit mindestens zwei, insbesondere das Medium berührenden, Messelektroden, mit einer an die Messelektroden angeschlossenen Signalspannungsquelle oder Signalstromquelle zur Erzeugung von Leitfähigkeitsmesssignalen, mit einer Steuerschaltung für die Magnetfelderzeugungseinrichtung und für die Signalspannungsquelle oder die Signalstromquelle sowie mit einer Auswerteschaltung.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die mindestens eine Magnetfeldspule, üblicherweise zwei Magnetfeldspulen aufweist, ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohrs bzw. senkrecht zur Strömungsrichtung des Mediums auf.

Wenn es einleitend heißt, dass zu dem in Rede stehenden magnetisch-induktiven Durchflussmessgerät mindestens eine Magnetfelderzeugungseinrichtung "zur Erzeugung eines zumindest auch senkrecht zur Längsachse des Messrohrs verlaufenden Magnetfeldes" gehört, dann sei hier noch einmal darauf hingewiesen, dass das Magnetfeld zwar vorzugsweise senkrecht zur Längsachse des Messrohrs bzw. senkrecht zur Strömungsrichtung des Mediums verläuft, ausreichend jedoch ist, dass eine Komponente des Magnetfeldes senkrecht zur Längsachse des Messrohrs bzw. senkrecht zur Strömungsrichtung des Mediums verläuft.

Eingangs ist auch ausgeführt, dass zu dem in Rede stehenden magnetisch-induktiven Durchflussmessgerät mindestens zwei, insbesondere das Medium berührende, Messelektroden gehören. Diese Messelektroden dienen zum Abgreifen einer in dem strömenden Medium induzierten Messspannung. Vorzugsweise verläuft die virtuelle Verbindungslinie der beiden Messelektroden zumindest im Wesentlichen senkrecht zur Richtung des das Messrohr senkrecht zur Längsachse des Messrohrs durchsetzenden Magnetfeldes. Insbesondere können die Messelektroden so vorgesehen sein, dass deren virtuelle Verbindungslinie tatsächlich - mehr oder weniger - senkrecht zur Richtung des das Magnetfeld durchsetzenden Magnetfeldes verläuft.

Schließlich ist eingangs ausgeführt, dass es sich bei den Messelektroden insbesondere um solche handeln kann, die das Medium berühren. Tatsächlich kann selbstverständlich die durch Induktion im strömenden, elektrisch leitfähigen Medium erzeugte elektrische Feldstärke durch direkt, also galvanisch mit dem Medium in Kontakt stehende Messelektroden als Messspannung abgegriffen werden. Es gibt aber auch magnetisch-induktive Durchflussmessgeräte, bei denen die Messspannung nicht durch direkt, also nicht durch galvanisch mit dem Medium in Kontakt stehende Messelektroden abgegriffen wird, vielmehr die Messspannung kapazitiv erfasst wird.

Ist primärer Verwendungszweck von magnetisch-induktiven Durchflussmessgeräten der in Rede stehenden Art natürlich die Messung des Durchflusses eines Mediums durch ein Messrohr, und zwar eines Mediums, das zumindest eine geringe elektrische Leitfähigkeit hat, also die Durchflussmessung, so ist die Verwendung von magnetisch-induktiven Durchflussmessgeräten nicht auf diesen Verwendungszweck beschränkt. Insbesondere können magnetisch-induktive Durchflussmessgeräte nämlich auch zur Leitfähigkeitsmessung eingesetzt werden.

Magnetisch-induktive Durchflussmessgeräte können zur Leitfähigkeitsmessung verwendet werden, wenn die Leitfähigkeit des Mediums, dessen Durchfluss gemessen werden soll, für welchen Zweck auch immer, von Interesse oder von Bedeutung ist. Insbesondere ist aber die Leitfähigkeit des Mediums, dessen Durchfluss gemessen werden soll, für die Durchflussmessung selbst von Bedeutung, weil nämlich die an den Messelektroden abgreifbare Messspannung nicht nur von der Magnetfeldstärke des von der Magnetfelderzeugungseinrichtung erzeugten Magnetfeldes und vom zu messenden Durchfluss, sondern vielmehr auch von der Leitfähigkeit des Mediums abhängig ist, dessen Durchfluss gemessen werden soll.

Das eingangs beschriebene magnetisch-induktive Durchflussmessgerät ist ein solches, das nicht nur zur Durchflussmessung, vielmehr auch zur Leitfähigkeitsmessung bestimmt und geeignet ist, nämlich - für die Leitfähigkeitsmessung - eine Signalspannungsquelle oder eine Signalstromquelle aufweist, mit der Leitfähigkeitsmesssignale erzeugt werden.

Bei einem solchen magentisch-induktiven Durchflussmessgerät ist / sind die Steuerschaltung oder / und die Auswerteschaltung so ausgeführt, dass nur während einer Durchflussmesszeit, die kleiner ist als die halbe Periodendauer der Magnetfelderzeugung, die von den Messelektroden abgegriffene bzw. abgreifbare Messspannung für die Durchflussmessung ausgewertet wird, und dass die Steuerschaltung so ausgeführt ist, dass nur während einer Leitfähigkeitsmesszeit, die außerhalb der Durchflussmesszeit liegt, die Messelektroden mit Leitfähigkeitsmesssignalen beaufschlagt werden.

Wie eingangs ausgeführt, gehört zu magnetisch-induktiven Durchflussmessgeräten der in Rede stehenden Art eine Magnetfelderzeugungseinrichtung zur Erzeugung eines zumindest auch senkrecht zur Längsachse des Messrohrs verlaufenden wechselnden Magnetfeldes. Zu der Magnetfelderzeugungseinrichtung gehören folglich funktionsnotwendig jedenfalls eine Magnetisierungsstromquelle und mindestens eine Magnetfeldspule, üblicherweise zwei Magnetfeldspulen. Die Magnetisierungsstromquelle erzeugt, wie ausgeführt, ein wechselndes Magnetfeld. Dabei handelt es sich nicht um ein sinusförmiges Magnetfeld, sondern um ein solches, das daraus resultiert, dass die Magnetfeldspule bzw. die Magnetfeldspulen von einem Gleichstrom mit wechselnder Polarität durchflossen werden, und zwar während der ersten halben Periodendauer in einer Richtung und während der zweiten halben Periodendauer in der anderen Richtung.

Für das Magnetfeld, das durch den Magnetisierungsstrom in der Feldspule bzw. in den Feldspulen erzeugt wird, gilt, dass es in seinem zeitlichen Verlauf nicht exakt dem zeitlichen Verlauf des Magnetisierungsstroms folgt. Tatsächlich gibt es nämlich für das Magnetfeld zunächst zu Beginn des fließenden Gleichstroms eine Einschwingphase und nach dem Ende des fließenden Gleichstroms eine Ausschwingphase. Nach dem Ende der Einschwingphase und vor dem Beginn der Ausschwingphase ist das Magnetfeld konstant, und folglich wird im Stand der Technik die an den Messelektroden abgegriffene bzw. abgreifbare Messspannung für die Durchflussmessung nur während einer Durchflussmesszeit ausgewertet, die nach dem Ende der Einschwingphase und vor dem Beginn der Ausschwingphase liegt.

Die Leitfähigkeit, der reziproke Wert des Widerstandes, ergibt sich, gemäß dem ohm'schen Gesetz, aus einer an die Messelektroden angelegten Leitfähigkeitsmessspannung und dem dann zwischen den Messelektroden fließenden Leitfähigkeitsmessstrom oder aus einem über die Messelektroden fließenden, in die Messelektroden eingeprägten Leitfähigkeitsmessstrom und der dann an den Messelektroden entstehenden Leitfähigkeitsmessspannung. Wird eine Leitfähigkeitsmessspannung angelegt, dann sollte der Innenwiderstand der Signalspannungsquelle möglichst klein sein, wird von einem über die Messelektroden fließenden, in die Messelektroden eingeprägten Leitfähigkeitsmessstrom ausgegangen, dann sollte der Innenwiderstand der Signalstromquelle möglichst groß sein. Vorzugsweise arbeitet man mit einem in die Messelektroden eingeprägten Leitfähigkeitsmessstrom und misst dann, als Maß für die zu bestimmende Leitfähigkeit, die an den Messelektroden auftretende Leitfähigkeitsmessspannung.

Magnetisch-induktive Durchflussmessgeräte der eingangs beschriebenen Art, die also auch zur Leitfähigkeitsmessung bestimmt und geeignet sind, sind zum Beispiel aus der Übersetzung der europäischen Patentschrift 0 704 682, der Druckschrift DE 692 32 633 C 2, sowie aus deutschen Offenlegungsschriften, den Druckschriften DE 102 43 748 A 1 und 10 208 005 258 A1, bekannt.

Die EP 0 336 615 A1 beschreibt die abwechselnde Messung von Leitfähigkeit und Durchfluss mit einem magnetisch-induktiven Durchflussmessgerät. Dabei wird ein Signal empfangen und durch ein Samplingverfahren in zwei Teilsignale separiert, die die Bestimmung der einzelnen Messgrößen erlauben. Die Messelektroden werden mit dem Leitfähigkeitsmesssignal beaufschlagt.

Die JP 2004 219372 A und die JP 2002 310750 A offenbaren jeweils ein magnetisch-induktives Durchflussmessgerät mit Messelektroden und einer Stromquelle zur Einspeisung eines konstanten Stroms in die Messelektroden zur Bestimmung einer elektrischen Leitfähigkeit eines Mediums. Mit der bestimmten elektrischen Leitfähigkeit wird eine Messgenauigkeit einer Durchflussmessung verbessert.

Die US 2008/0016967 A1 offenbart ein weiteres magnetisch-induktives Durchflussmessgerät. Bei diesem wird über eine Elektrode ein Signal in das zu messende Fluid eingespeist und an einer weiteren Elektrode ein Messsignal abgegriffen. Es sind elektronische Mittel vorgesehen, die aus Signalen an den Elektroden eine Impedanz bestimmen.

Der Erfindung liegt die Aufgabe zugrunde, die bekannten magnetisch-induktiven Durchflussmessgeräte, von denen die Erfindung ausgeht, zu verbessern und ein besonders geeignetes Verfahren zum Betreiben eines magnetisch-induktiven Durchflussmessgeräts, mit dem auch eine Leitfähigkeitsmessung durchgeführt werden kann, anzugeben.

Das erfindungsgemäße magnetisch-induktive Durchflussmessgerät ist zunächst und im Wesentlichen dadurch gekennzeichnet, dass die Steuerschaltung so ausgeführt ist, dass von Signalspannungsquelle oder der Signalstromquelle zusätzlich zu den Leitfähigkeitsmesssignalen, zeitversetzt zu diesen Leitfähigkeitsmesssignalen, Korrektursignale erzeugt werden. Mit diesen Korrektursignalen können Messfehler unterschiedlicher Art bzw. unterschiedlicher Ursache reduziert bzw. eliminiert werden.

Einzelheiten dazu werden nachfolgend in Verbindung mit einem erfindungsgemäßen Verfahren zum Betreiben eines magnetisch-induktiven Durchflussmessgeräts und in Verbindung mit der Zeichnung erläutert.

Bei dem erfindungsgemäßen magnetisch-induktiven Durchflussmessgerät wird, wie ausgeführt, die Leitfähigkeitsmessung dann durchgeführt, wenn keine Durchflussmessung durchgeführt wird, bzw. die Durchflussmessung dann durchgeführt, wenn keine Leitfähigkeitsmessung durchgeführt wird. Damit bei der Durchflussmessung, also während der Durchflussmesszeit, das Messergebnis nicht durch die Signalspannungsquelle bzw. die Signalstromquelle beeinflusst wird, ist bei einer bevorzugten Ausführungsform des erfindungsgemä-ßen magnetisch-induktiven Durchflussmessgeräts die Steuerschaltung so ausgeführt, dass während der Durchflussmesszeit die Signalspannungsquelle bzw. die Signalstromquelle abgeschaltet, zumindest aber hochohmig geschaltet ist.

Wie schon ausgeführt, kann bei dem erfindungsgemäßen magnetisch-induktiven Durchflussmessgerät mit einer Signalspannungsquelle oder mit einer Signalstromquelle gearbeitet werden. Vorzugsweise wird in dem einen wie in dem anderen Fall mit Leitfähigkeitsmesssignalen gearbeitet, die Wechselsignale sind. Wird mit einer Signalspannungsquelle gearbeitet, dann handelt es sich also um eine Wechselspannungsquelle, wird mit einer Signalstromquelle gearbeitet, dann handelt es sich um eine Wechselstromquelle.

Ohne dass darin eine Einschränkung gesehen werden darf, wird nachfolgend immer davon ausgegangen, dass zu dem erfindungsgemäßen magnetisch-induktiven Durchflussmessgerät eine Signalstromquelle gehört.

Bei dem erfindungsgemäßen magnetisch-induktiven Durchflussmessgerät kann die Signalstromquelle in unterschiedlicher Weise mit den Messelektroden verbunden sein. Das wird weiter unten, in Verbindung mit der Zeichnung im Einzelnen beschrieben, so dass sich hier eine diesbezügliche Beschreibung erübrigt.

Wie eingangs ausgeführt, ist Gegenstand der Erfindung auch ein Verfahren zum Betreiben eines erfindungsgemäßen magnetisch-induktiven Durchflussmessgeräts, wie es zuvor beschrieben ist, bei dem Leitfähigkeitsmesssignale erzeugt und die Messelektroden mit den Leitfähigkeitsmesssignalen beaufschlagt werden.

Das erfindungsgemäße Verfahren zum Betreiben eines magnetisch-induktiven Durchflussmessgeräts ist zunächst und im Wesentlichen dadurch gekennzeichnet, dass zusätzlich zu den Leitfähigkeitsmesssignalen, zeitversetzt zu diesen Leitfähigkeitsmesssignalen, Korrektursignale zur Reduzierung bzw. Eliminierung von Messfehlern unterschiedlicher Art bzw. Ursache erzeugt werden und die Messelektroden auch mit den Korrektursignalen beaufschlagt werden, was der Erläuterung bedarf, die nachfolgend gegeben wird.

Es ist bereits ausgeführt, dass für das Magnetfeld, das bei magnetisch-induktiven Durchflussmessgeräten durch den Magnetisierungsstrom in der Magnetfeldspule bzw. in den Magnetfeldspulen erzeugt wird, gilt, dass es in seinem zeitlichen Verlauf nicht exakt dem zeitlichen Verlauf des Magnetisierungsstroms folgt, dass es nämlich für das Magnetfeld zunächst zu Beginn des fließenden Gleichstroms eine Einschwingphase und nach dem Ende des flie-ßenden Gleichstroms eine Ausschwingphase gibt, dass nach dem Ende der Einschwingphase und vor dem Beginn der Ausschwingphase das Magnetfeld konstant ist und dass die an den Messelektroden abgegriffene bzw. abgreifbare Messspannung für die Durchflussmessung nur während einer Durchflussmesszeit ausgewertet wird, die nach dem Ende der Einschwingphase und vor dem Beginn der Ausschwingphase liegt.

Für das erfindungsgemäße magnetisch-induktive Durchflussmessgerät ist wesentlich, dass nur während einer Durchflussmesszeit, die kleiner ist als die halbe Periodendauer der Magnetfelderzeugung, die von den Messelektroden abgegriffene bzw. abgreifbare Messspannung für die Durchflussmessung ausgewertet wird, und dass nur während einer Leitfähigkeitsmesszeit, die außerhalb der Durchflussmesszeit liegt, die Messelektroden mit Leitfähigkeitsmesssignalen beaufschlagt werden. Das lässt es zu, dass die Summe aus der Durchflussmesszeit und der Leitfähigkeitsmesszeit genau der halben Periodendauer der Magnetfelderzeugung entspricht. Sinnvollerweise werden jedoch die Durchflussmesszeit und die Leitfähigkeitsmesszeit insgesamt so gewählt, dass die Summe aus der Durchflussmesszeit und der Leitfähigkeitsmesszeit kleiner ist als die halbe Periodendauer der Magnetfelderzeugung, so dass ein zeitlicher Abstand zwischen der Durchflussmesszeit und der Leitfähigkeitsmesszeit gegeben ist.

Es ist schon mehrfach ausgeführt, dass bei bekannten magnetisch-induktiven Durchflussmessgeräten die an den Messelektroden abgegriffene oder abgreifbare Messspannung für die Durchflussmessung nur während einer Durchflussmesszeit ausgewertet wird, die nach dem Ende der Einschwingphase und vor dem Beginn der Ausschwingphase liegt. Das gibt die in der Praxis auch realisierte Möglichkeit, die Leitfähigkeitsmesszeit zeitlich so zu legen, dass sie in der Einschwingphase des Magnetfeldes oder in der Ausschwingphase des Magnetfeldes liegt.

Wie ausgeführt, ist das erfindungsgemäße Verfahren zum Betreiben eines magnetisch-induktiven Durchflussmessgeräts zunächst und im Wesentlichen dadurch gekennzeichnet, dass zusätzlich zu den Leitfähigkeitsmesssignalen, in jeder Periode der Magnetfelderzeugung ein Leitfähigkeitsmesssignal, zeitversetzt zu den Leitfähigkeitsmesssignalen, Korrektursignale erzeugt und die Messelektroden auch mit den Korrektursignalen beaufschlagt werden. Dabei können unterschiedliche Korrektursignale bzw. Korrekturmaßnahmen zur Anwendung kommen, um auf unterschiedliche, die Messgenauigkeit beeinflussende Faktoren reagieren zu können.

Bei einer ersten bevorzugten Ausführungsform des erfindungsgemäßen Verfahrens zum Betreiben eines magnetisch-induktiven Durchflussmessgeräts werden den Leitfähigkeitsmesssignalen entsprechende, gegenüber den Leitfähigkeitsmesssignalen um die halbe Periodendauer der Magnetfelderzeugung versetzte erste Korrekturimpulse erzeugt.

Für den Fall, dass bei dem erfindungsgemäßen Verfahren die Leitfähigkeitsmesssignale während der Einschwingzeit der Magnetfelder oder während der Ausschwingzeit der Magnetfelder erzeugt werden, geht eine konkretisierende Lehre der Erfindung dahin, dass die ersten Korrektursignale in ihrer Signalamplitude und ihrer Signaldauer exakt den Leitfähigkeitsmesssignalen entsprechen und die Messelektroden während der Ausschwingzeit der Magnetfelder oder während der Einschwingzeit der Magnetfelder mit den ersten Korrektursignalen beaufschlagt werden und dass aus den von den Leitfähigkeitsmesssignalen erzeugten Messspannungen und den von den ersten Korrektursignalen erzeugten Messspannungen der Mittelwert gebildet wird.

Bei magnetisch-induktiven Durchflussmessgeräten ist die Ausschwingphase des Magnetfeldes nicht exakt gleich der Einschwingphase des Magnetfeldes. Ein aus diesem Sachverhalt resultierender Messfehler wird durch die zuvorbeschriebene Lehre der Erfindung teilweise oder ganz kompensiert.

Bei magnetisch-induktiven Durchflussmessgeräten wird, wie eingangs ausgeführt, mit einem wechselnden Magnetfeld gearbeitet.

Weiter oben ist auch ausgeführt, dass es sich bei dem wechselnden Magnetfeld nicht um ein sinusförmiges Magnetfeld handelt, sondern um ein solches, das daraus resultiert, dass die Magnetfeldspule bzw. die Magnetfeldspulen von einem Gleichstrom mit wechselnder Polarität durchflossen werden, und zwar während der ersten halben Periodendauer in einer Richtung und während der zweiten halben Periodendauer in der anderen Richtung. Ein solcher Zyklus - Gleichstrom mit wechselnder Polarität - bestimmt also die Periodendauer der Magnetfelderzeugung. Folglich kann man von einer ersten Periodendauer der Magnetfelderzeugung, einer zweiten Periodendauer der Magnetfelderzeugung usw. sprechen. Jedenfalls gilt, dass jeweils einer ersten Periodendauer der Magnetfelderzeugung jeweils eine zweite Periodendauer der Magnetfelderzeugung folgt, der zweiten Periodendauer der Magnetfelderzeugung wieder eine erste Periodendauer usw.. Dies berücksichtigend geht eine weitere Lehre der Erfindung, der wiederum besondere Bedeutung zukommt, dahin, in jeder zweiten Periodendauer als zweite Korrektursignale phasenverschobene Leitfähigkeitsmesssignale zu erzeugen. Unter phasenverschobenen Leitfähigkeitsmesssignalen werden solche verstanden, bei denen die Polarität vertauscht ist. Bestehen also die Leitfähigkeitsmesssignale zunächst aus einem positiven Impuls und danach aus einem negativen Impuls, so gilt dann für die phasenverschobenen Leitfähigkeitsmesssignale, dass sie zunächst aus einem negativen Impuls und danach aus einem positiven Impuls bestehen.

Bei magnetisch-induktiven Durchflussmessgeräten ist die Kapazität zwischen den Magnetfeldspulen und den Messelektroden nicht symmetrisch. Ein aus diesem Sachverhalt resultierender Messfehler wird durch die zuvor beschriebene weitere Lehre der Erfindung teilweise oder ganz kompensiert.

Schließlich ist bei dem erfindungsgemäßen Verfahren zum Betreiben eines magnetisch-induktiven Durchflussmessgeräts eine besondere Ausführungsform, der wiederum besondere Bedeutung zukommt, dadurch gekennzeichnet, dass während der Durchflussmesszeiten, also ohne eine Beaufschlagung der Messelektroden mit Leitfähigkeitsmesssignalen, an den Messelektroden Messspannungen abgegriffen werden, und zwar in jeder Halbperiode zwei Messspannungen, dass aus den Messspannungen in einer ersten Halbperiode und den Messspannungen der folgenden Halbperiode der Mittelwert gebildet wird und dass dieser gemittelte Messwert von dem Messwert subtrahiert wird. Dabei ist der eigentliche Messwert der Messwert, der daraus resultiert, dass die Messelektroden mit Leitfähigkeitsmesssignalen beaufschlagt werden.

Wie mehrfach ausgeführt, wird bei den erfindungsgemäßen magnetisch-induktiven Durchflussmessgeräten mit einem wechselnden Magnetfeld gearbeitet. Dieses wechselnde Magnetfeld kann zu einem Brummen führen, also zu einer Überlagerung des "eigentlichen" Messwerts mit einer auf das magnetische Wechselfeld zurückgehenden Brummspannung. Dieser - natürlich unerwünschte - Fehlerquelle wird durch die zuletzt beschriebene Maßnahme entgegengewirkt.

Im Einzelnen gibt es verschiedene Möglichkeiten, das erfindungsgemäße magnetisch-induktive Durchflussmessgerät und das erfindungsgemäße Verfahren zum Betreiben eines magnetisch-induktiven Durchflussmessgeräts auszugestalten und weiterzubilden. Dazu wird verwiesen auf die dem unabhängigen Patentanspruch 1 nachgeordneten Patentansprüche 2 bis 6 und auf die dem unabhängigen Patentanspruch 7 nachgeordneten Patentansprüche 8 bis 11 sowie auf die nachfolgende Beschreibung bevorzugter Ausführungsbeispiele in Verbindung mit der Zeichnung. In der Zeichnung zeigen
- Fig. 1: schematisch, den grundsätzlichen Aufbau eines magnetisch-induktiven Durchflussmessgeräts,
- Fig. 2: ein erstes Ausführungsbeispiel einer zu einem erfindungsgemäßen magnetisch-induktiven Durchflussmessgerät gehörenden Schaltung,
- Fig. 3: ein zweites Ausführungsbeispiel einer zu einem erfindungsgemäßen magnetisch-induktiven Durchflussmessgerät gehörenden Schaltung und
- Fig. 4 bis 8: grafische Darstellungen zur Erläuterung verschiedener Ausführungsbeispiele erfindungsgemäßer Verfahren zum Betreiben eines magnetisch-induktiven Durchflussmessgeräts.

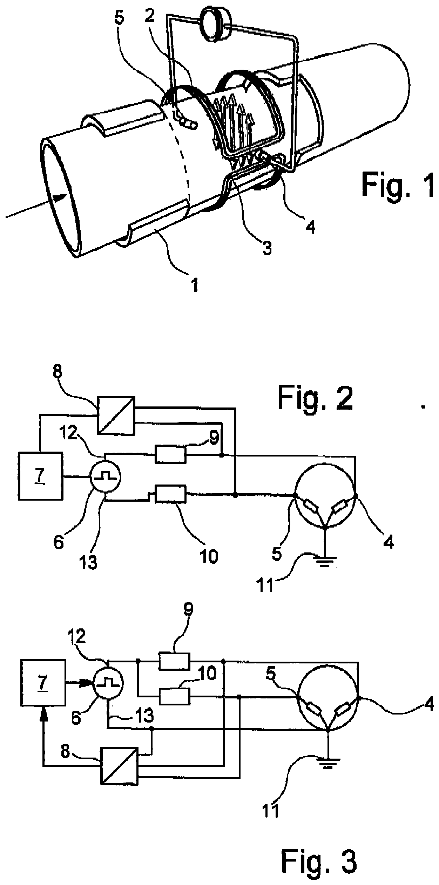

Das in der Fig. 1 nur schematisch, in seinem grundsätzlichen Aufbau dargestellte magnetisch-induktive Durchflussmessgerät besteht aus einem Messrohr 1 für den Durchfluss eines elektrisch leitenden Mediums, aus einer Magnetfelderzeugungseinrichtung zur Erzeugung eines zumindest auch senkrecht zur Längsachse des Messrohrs 1 verlaufenden wechselnden Magnetfeldes, im dargestellten Ausführungsbeispiel mit zwei Magnetfeldspulen 2, 3, aus zwei vorzugsweise das Medium berührenden Messelektroden 4, 5 und aus in der Fig. 1 nicht dargestellten Bauteilen, nämlich einer an die Messelektroden 4, 5 angeschlossenen, in den Fig. 2 und 3 dargestellten Signalstromquelle 6 zur Erzeugung von Leitfähigkeitsmesssignalen, einer in den Fig. 2 und 3 dargestellten Steuerschaltung 7 für die Signalstromquelle 6, und aus einer in den Fig. 2 und 3 dargestellten Auswerteschaltung 8.

Für das in Rede stehende magnetisch-induktive Durchflussmessgerät gilt, was weder in der Fig. 1 noch in den Fig. 2 und 3 im Einzelnen dargestellt ist, dass die Steuerschaltung 7 oder / und die Auswerteschaltung 8 so ausgeführt ist bzw. sind, dass nur während einer Durchflussmesszeit, die kleiner ist als die halbe Periode der Magnetfelderzeugung, die von den Messelektroden 4, 5 abgegriffene bzw. abgreifbare Messspannung für die Durchflussmessung ausgewertet wird, und dass die Steuerschaltung 7 so ausgeführt ist, dass nur während einer Leitfähigkeitsmesszeit, die außerhalb der Durchflussmesszeit liegt, die Messelektroden 4, 5 mit Leitfähigkeitsmesssignalen beaufschlagt werden. Nicht dargestellt ist auch, dass die Steuerschaltung 7 so ausgeführt ist, dass während der Durchflussmesszeit die Signalstromquelle 6 abgeschaltet, zumindest aber hochohmig geschaltet ist.

Für eine besondere Ausführungsform eines erfindungsgemäßen magnetisch-induktiven Durchflussmessgeräts gilt weiter, was die Fig. 2 und 3 zeigen, dass zwischen der Signalstromquelle 6 und jeder Messelektrode 4, 5 jeweils ein Spannungsteilerwiderstand 9, 10 geschaltet ist. Dabei wird dann als Messwert für die Leitfähigkeit die an den Messelektroden 4, 5 entstehende Messspannung ausgewertet.

Während bei der in der Fig. 2 dargestellten Schaltung der erste Signalausgang 12 der Signalstromquelle 6 mit der Messelektrode 4 und der zweite Signalausgang 13 der Signalstromquelle 6 mit der Messelektrode 5 verbunden sind, gilt für die in der Fig. 3 dargestellte Schaltung, dass nur ein Signalausgang 12 der Signalstromquelle 6 über jeweils einen Spannungsteilerwiderstand 9, 10 mit beiden Messelektroden 4, 5 verbunden ist. Bei dieser Schaltung wird als Messwert für die Leitfähigkeit der Messspannung die Messspannung ausgewertet, die jeweils zwischen einer Messelektrode 4 bzw. 5 und einem Bezugspotenzial 11 entsteht.

In den Fig. 2 und 3, die besondere Schaltungen für das erfindungsgemäße magnetisch-induktive Durchflussmessgerät zeigen, ist nicht dargestellt, dass in Reihe zu mindestens einem Spannungsteilerwiderstand 9, 10 ein Entkoppelkondensator, vorzugsweise in Reihe zu beiden Spannungsteilerwiderständen 9, 10 jeweils ein Entkoppelkondensator geschaltet sein kann, dass mithilfe der Steuerschaltung 7 der Widerstandswert der Spannungsteilerwiderstände 9, 10 oder / und der Kapazitätswert des Entkoppelkondensators, eines Entkoppelkondensators oder der Entkoppelkondensatoren einstellbar ist und dass die Steuerschaltung 7 so ausgeführt ist, dass von der Signalstromquelle 6 zusätzlich zu den Leitfähigkeitsmesssignalen, zeitversetzt zu den Leitfähigkeitsmesssignalen, Korrektursignale erzeugt werden.

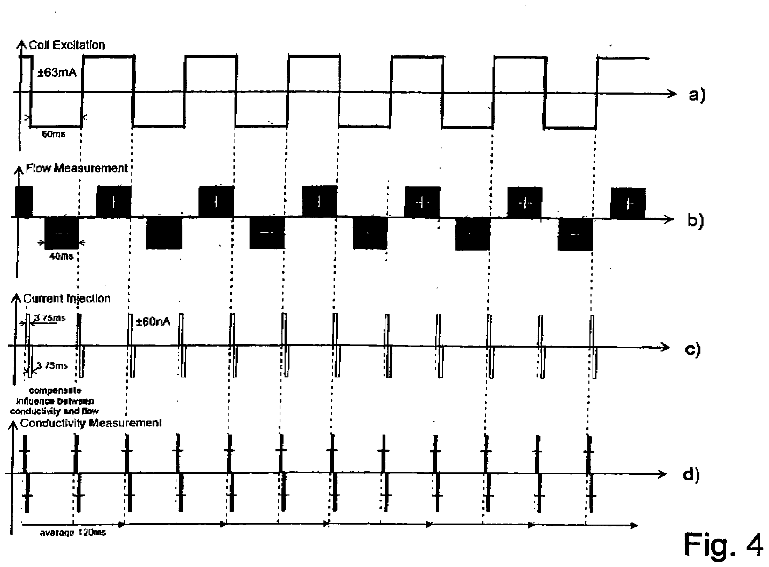

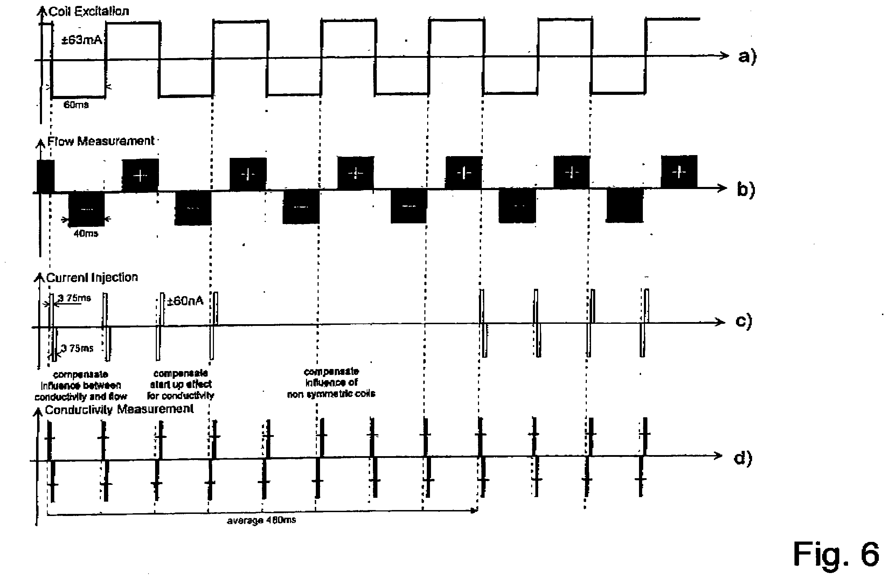

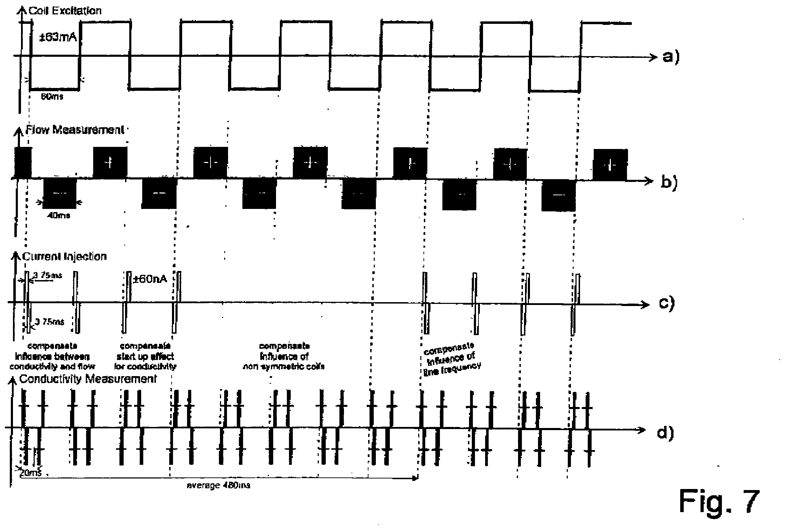

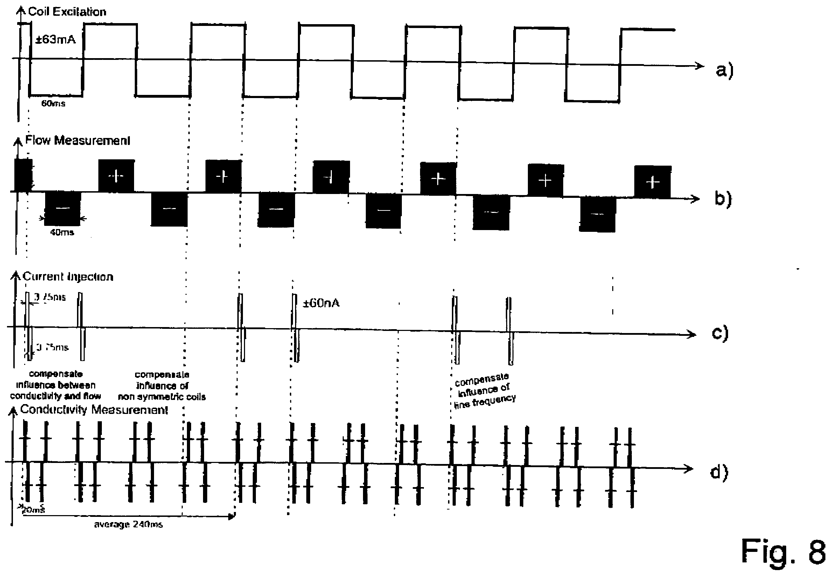

Die Fig. 4 bis 8 zeigen grafische Darstellungen zur Erläuterung verschiedener Ausführungsbeispiele erfindungsgemäßer Verfahren zum Betreiben eines magnetisch-induktiven Durchflussmessgeräts.

Dabei zeigen jeweils die Skizze a) den Verlauf des Magnetfeldes, die Skizze b) den Verlauf der Durchflussmessung, die Skizze c) den Verlauf von der Leitfähigkeitsmessung dienenden Leitfähigkeitsmesssignalen und die Skizze d) die Messwerte für die Leitfähigkeit.

Die Skizzen a) und b) bedürfen keiner Erläuterung, sie geben den umfangreich bekannten Stand der Technik wieder.

Auch in der Fig. 4 zeigen die Skizzen c) und d) im Stand der Technik bekannte Maßnahmen, nämlich in der Skizze c) Leitfähigkeitsmesssignale, die nur während Leitfähigkeitsmesszeiten, die außerhalb der Durchflussmesszeiten liegen, erzeugt werden.

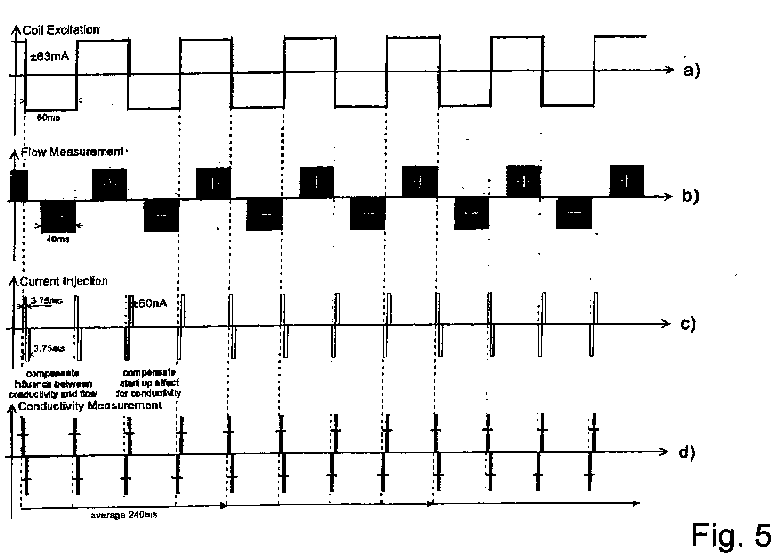

Für die Skizzen c) in den Fig. 5 bis 8 gilt, dass zusätzlich zu den Leitfähigkeitsmesssignalen, zeitversetzt zu den Leitfähigkeitsmesssignalen, Korrektursignale vorhanden sind. Die Messelektroden werden sowohl mit den Leitfähigkeitsmesssignalen als auch mit den Korrektursignalen beaufschlagt. Welcher Art diese Korrektursignale sind und was damit erreicht wird, ergibt sich aus der vorangehenden Beschreibung und den Patentansprüchen 11 bis 14.

## Patentansprüche

1. Magnetisch-induktives Durchflussmessgerät, mit mindestens einem Messrohr (1) für den Durchfluss eines elektrisch leitenden Mediums, mit mindestens einer Magnetfelderzeugungseinrichtung zur Erzeugung eines zumindest auch senkrecht zur Längsachse des Messrohrs (1) verlaufenden wechselnden Magnetfeldes, mit mindestens zwei Messelektroden (4, 5), mit einer an die Messelektroden (4, 5) angeschlossenen Signalspannungsquelle oder Signalstromquelle (6) zur Erzeugung von Leitfähigkeitsmesssignalen, mit einer Steuerschaltung (7) für die Magnetfelderzeugungseinrichtung und für die Signalspannungsquelle oder die Signalstromquelle (6) sowie mit einer Auswerteschaltung (8), wobei die Steuerschaltung (7) oder / und die Auswerteschaltung (8) so ausgeführt ist bzw. sind, dass nur während einer Durchflussmesszeit, die kleiner ist als die halbe Periodendauer der Magnetfelderzeugung, die von den Messelektroden (4, 5) abgegriffene bzw. abgreifbare Messspannung für die Durchflussmessung ausgewertet wird, und wobei die Steuerschaltung (7) so ausgeführt ist, dass nur während einer Leitfähigkeitsmesszeit, die außerhalb der Durchflussmesszeit liegt, die Messelektroden (4, 5) mit Leitfähigkeitsmesssignalen beaufschlagt werden,
**dadurch gekennzeichnet,**
**dass** die Steuerschaltung (7) so ausgeführt ist, dass von der Signalspannungsquelle oder der Signalstromquelle (6) zusätzlich zu den Leitfähigkeitsmesssignalen, zeitversetzt zu den Leitfähigkeitsmesssignalen, Korrektursignale zur Reduzierung bzw. Eliminierung von Messfehlern unterschiedlicher Art bzw. Ursache erzeugt werden.

2. Magnetisch-induktives Durchflussmessgerät nach Anspruch 1, **dadurch gekennzeichnet, dass** an die Messelektroden (4, 5) die Signalstromquelle (6) angeschlossen ist, dass zwischen der Signalstromquelle (6) und jeder Messelektrode (4, 5) jeweils ein Spannungsteilerwiderstand (9, 10) geschaltet ist und dass als Messwert für die Leitfähigkeit die an den Messelektroden (4, 5) entstehende Messspannung ausgewertet wird.

3. Magnetisch-induktives Durchflussmessgerät nach Anspruch 2, **dadurch gekennzeichnet, dass** nur ein Signalausgang (12) der Signalstromquelle (6) über jeweils einen Spannungsteilerwiderstand (9, 10) mit beiden Messelektroden (4, 5) verbunden ist und dass als Messwert für die Leitfähigkeit die Messspannung ausgewertet wird, die jeweils zwischen einer Messelektrode (4, 5) und einem Bezugspotenzial (11) entsteht.

4. Magnetisch-induktives Durchflussmessgerät nach Anspruch 2 oder 3, **dadurch gekennzeichnet, dass** in Reihe zu mindestens einem Spannungsteilerwiderstand (9, 10) ein Entkoppelkondensator geschaltet ist.

5. Magnetisch-induktives Durchflussmessgerät nach einem der Ansprüche 2 bis 4, **dadurch gekennzeichnet, dass** mit Hilfe der Steuerschaltung (7) der Widerstandswert der Spannungsteilerwiderstände (9, 10) oder / und der Kapazitätswert des Entkoppelkondensators einstellbar ist.

6. Verfahren zum Betreiben eines magnetisch-induktiven Durchflussmessgeräts nach einem der Ansprüche 1 bis 5, bei dem Leitfähigkeitsmesssignale erzeugt und die Messelektroden (4, 5) mit den Leitfähigkeitsmesssignalen beaufschlagt werden,
**dadurch gekennzeichnet,**
**dass** zusätzlich zu den Leitfähigkeitsmesssignalen, zeitversetzt zu den Leitfähigkeitsmesssignalen, Korrektursignale zur Reduzierung bzw. Eliminierung von Messfehlern unterschiedlicher Art bzw. Ursache erzeugt und die Messelektroden (4, 5) auch mit den Korrektursignalen beaufschlagt werden.

7. Verfahren nach Anspruch 6, **dadurch gekennzeichnet, dass** den Leitfähigkeitsmesssignalen entsprechende, gegenüber den Leitfähigkeitsmesssignalen um die halbe Periodendauer der Magnetfelderzeugung versetzte erste Korrektursignale erzeugt werden.

8. Verfahren nach Anspruch 7, wobei die Leitfähigkeitsmesssignale während der Einschwingzeit der Magnetfelder oder während der Ausschwingzeit der Magnetfelder erzeugt werden, **dadurch gekennzeichnet, dass** die ersten Korrektursignale in ihrer Signalamplitude und ihrer Signaldauer exakt den Leitfähigkeitsmesssignalen entsprechen und die Messelektroden während der Ausschwingzeit der Magnetfelder oder während der Einschwingzeit der Magnetfelder mit den ersten Korrektursignalen beaufschlagt werden und dass aus den von den Leitfähigkeitsmesssignalen erzeugten Messspannungen und den von den ersten Korrektursignalen erzeugten Messspannungen der Mittelwert gebildet wird.

9. Verfahren nach einem der Ansprüche 6 bis 8, wobei jeweils einer ersten Periodendauer der Magnetfelderzeugung jeweils eine zweite Periodendauer der Magnetfelderzeugung folgt, **dadurch gekennzeichnet, dass** in jeder zweiten Periodendauer als zweite Korrektursignale phasenverschobene Leitfähigkeitsmesssignale erzeugt werden, wobei unter phasenverschobenen Leitfähigkeitsmesssignalen solche Leitfähigkeitsmesssignale verstanden werden, bei denen die Polarität vertauscht ist.

10. Verfahren nach einem der Ansprüche 6 bis 9, **dadurch gekennzeichnet, dass** während der Durchflussmesszeit, also ohne eine Beaufschlagung der Messelektroden mit Leitfähigkeitsmesssignalen, an den Messelektroden Messspannungen abgegriffen werden, und zwar in jeder Halbperiode zwei Messspannungen, dass aus den Messspannungen in einer ersten Halbperiode und den Messspannungen der folgenden Halbperiode der Mittelwert gebildet wird und dass dieser gemittelte Messwert von dem eigentlichen Messwert subtrahiert wird, wobei der eigentliche Messwert der Messwert ist, der daraus resultiert, dass die Messelektroden mit Leitfähigkeitsmesssignalen beaufschlagt werden

## Claims

1. Magnetic-inductive flowmeter, having at least one measuring tube (1) for the flow of an electrically conductive medium, having at least one magnetic field generating device for generating an alternating magnetic field extending at least also perpendicularly to the longitudinal axis of the measuring tube (1), having at least two measuring electrodes (4, 5), having a signal voltage source or signal current source (6) connected to the measuring electrodes (4, 5) for generating conductivity measuring signals, having a control circuit (7) for the magnetic field generating device and for the signal voltage source or the signal current source (6), as well as with an evaluation circuit (8), wherein the control circuit (7) and/or the evaluation circuit (8) is/are designed in such a way that only during a flow measuring operation the signal voltage source or the signal current source (6) is/are generated in such a way that the measuring voltage tapped or tappable from the measuring electrodes (4, 5) is evaluated for the flow measurement only during a flow measurement time which is less than half the period duration of the magnetic field generation, and wherein the control circuit (7) is designed in such a way that conductivity measurement signals are applied to the measuring electrodes (4, 5) only during a conductivity measurement time which lies outside the flow measurement time,
**characterized in**
**that** the control circuit (7) is designed in such a way that, in addition to the conductivity measurement signals, the signal voltage source or the signal current source (6) generates, with a time delay relative to the conductivity measurement signals, correction signals for reducing or eliminating measurement errors of different types or causes.

2. Magnetic-inductive flowmeter according to claim 1, **characterized in that** the signal current source (6) is connected to the measuring electrodes (4, 5), that a voltage divider resistor (9, 10) is connected in each case between the signal current source (6) and each measuring electrode (4, 5), and that the measuring voltage arising at the measuring electrodes (4, 5) is evaluated as the measured value for the conductivity.

3. Magnetic-inductive flowmeter according to claim 2, **characterized in that** only one signal output (12) of the signal current source (6) is connected to both measuring electrodes (4, 5) via a voltage divider resistor (9, 10) in each case, and that the measuring voltage which arises between a measuring electrode (4, 5) and a reference potential (11) in each case is evaluated as the measured value for the conductivity.

4. Magnetic-inductive flowmeter according to claim 2 or 3, **characterized in that** a decoupling capacitor is connected in series with at least one voltage divider resistor (9, 10).

5. Magnetic-inductive flowmeter according to any one of claims 2 to 4, **characterized in that** the control circuit (7) is used to set the resistance value of the voltage divider resistors (9, 10) or / and the capacitance value of the decoupling capacitor.

6. Method of operating a magnetic-inductive flowmeter according to any one of claims 1 to 5, in which conductivity measurement signals are generated and the conductivity measurement signals are applied to the measurement electrodes (4, 5),
**characterized in**
**that**, in addition to the conductivity measurement signals, correction signals for reducing or eliminating measurement errors of different types or causes are generated with a time delay with respect to the conductivity measurement signals, and the measurement electrodes (4, 5) also have the correction signals applied to them.

7. Method according to claim 6, **characterized in that** first correction signals are generated which correspond to the conductivity measurement signals and are offset relative to the conductivity measurement signals by half the period duration of the magnetic field generation.

8. Method according to claim 7, wherein the conductivity measurement signals are generated during the settling time of the magnetic fields or during the decay time of the magnetic fields, **characterized in**, **in that** the first correction signals correspond exactly to the conductivity measurement signals in their signal amplitude and their signal duration, and the first correction signals are applied to the measurement electrodes during the settling time of the magnetic fields or during the settling time of the magnetic fields, and **in that** the mean value is formed from the measurement voltages generated by the conductivity measurement signals and the measurement voltages generated by the first correction signals.

9. Method according to any one of claims 6 to 8, wherein a first period of magnetic field generation is followed in each case by a second period of magnetic field generation, **characterized in that** phase-shifted conductivity measurement signals are generated as second correction signals in each second period, wherein phase-shifted conductivity measurement signals are understood to be those in which the polarity is reversed.

10. Method according to any one of claims 6 to 9, **characterized in that** during the flow measurement period, i.e. without applying conductivity measurement signals to the measurement electrodes, measurement voltages are tapped at the measurement electrodes, namely two measurement voltages in each half period, that the average value is formed from the measurement voltages in a first half period and the measurement voltages of the following half period, and that this averaged measurement value is subtracted from the actual measurement value, wherein the actual measurement value is the measurement value resulting from the fact that conductivity measurement signals are applied to the measurement electrodes.

## Revendications

1. Débitmètre magnéto-inductif, comprenant au moins un tube de mesure (1) destiné au débit d'un milieu électriquement conducteur, au moins un dispositif générateur de champ magnétique destiné à générer un champ magnétique alternatif qui s'étend au moins également perpendiculairement à l'axe longitudinal du tube de mesure (1), au moins deux électrodes de mesure (4, 5), une source de tension de signal ou source de courant de signal (6) raccordée aux électrodes de mesure (4, 5) et destinée à générer des signaux de mesure de conductivité, un circuit de commande (7) destiné au dispositif générateur de champ magnétique et à la source de tension de signal ou la source de courant de signal (6) et un circuit d'évaluation (8), le circuit de commande (7) et/ou le circuit d'évaluation (8) étant conçus de sorte que la tension de mesure, destinée à la mesure de débit et prise ou pouvant être prise par les électrodes de mesure (4, 5), soit évaluée uniquement pendant un temps de mesure de débit qui est inférieur à la moitié de la période de génération du champ magnétique et le circuit de commande (7) étant conçu de sorte que des signaux de mesure de conductivité soient appliqués aux électrodes de mesure (4, 5) uniquement pendant un temps de mesure de conductivité qui est situé en dehors du temps de mesure de débit,
**caractérisé en ce que**
le circuit de commande (7) est conçu de sorte que des signaux de correction destinés à réduire ou éliminer des erreurs de mesure de différents types ou différentes causes sont générés par la source de tension de signal ou la source de courant de signal (6) en plus des signaux de mesure de conductivité, en étant décalés dans le temps par rapport aux signaux de mesure de conductivité.

2. Débitmètre magnéto-inductif selon la revendication 1, **caractérisé en ce que** la source de courant de signal (6) est raccordée aux électrodes de mesure (4, 5), **en ce qu'**une résistance de division de tension (9, 10) est montée entre la source de courant de signal (6) et chaque électrode de mesure (4, 5) et **en ce que** la tension de mesure apparaissant aux bornes des électrodes de mesure (4, 5) est évaluée comme valeur de mesure de la conductivité.

3. Débitmètre magnéto-inductif selon la revendication 2, **caractérisé en ce qu'**une seule sortie de signal (12) de la source de courant de signal (6) est reliée aux deux électrodes de mesure (4, 5) par le biais d'une résistance de division de tension respective (9, 10) et **en ce que** la tension de mesure, qui est générée à chaque fois entre une électrode de mesure (4, 5) et un potentiel de référence (11), est évaluée comme valeur de mesure de la conductivité.

4. Débitmètre magnéto-inductif selon la revendication 2 ou 3, **caractérisé en ce qu'**un condensateur de découplage est monté en série avec au moins une résistance de division de tension (9, 10).

5. Débitmètre magnéto-inductif selon l'une des revendications 2 à 4, **caractérisé en ce que** la valeur de résistance des résistances de division de tension (9, 10) et/ou la valeur de capacité du condensateur de découplage sont réglables à l'aide du circuit de commande (7).

6. Procédé de fonctionnement d'un débitmètre magnéto-inductif selon l'une des revendications 1 à 5, dans lequel des signaux de mesure de conductivité sont générés et les signaux de mesure de conductivité sont appliqués aux électrodes de mesure (4, 5),
**caractérisé en ce que**
des signaux de correction destinés à réduire ou éliminer des erreurs de mesure de différents types ou différentes causes sont générés en plus des signaux de mesure de conductivité en étant décalés dans le temps par rapport aux signaux de mesure de conductivité, et les signaux de correction sont également appliqués aux électrodes de mesure (4, 5).

7. Procédé selon la revendication 6, **caractérisé en ce que** des premiers signaux de correction sont générés qui correspondent aux signaux de mesure de conductivité et qui sont décalés par rapport aux signaux de mesure de conductivité de la moitié de la période de génération du champ magnétique.

8. Procédé selon la revendication 7, les signaux de mesure de conductivité étant générés pendant le temps d'établissement des champs magnétiques ou pendant le temps d'évanouissement des champs magnétiques, **caractérisé en ce que** les premiers signaux de correction correspondent, en termes d'amplitude et de durée, exactement aux signaux de mesure de conductivité et les premiers signaux de correction sont appliqués aux électrodes de mesure pendant le temps d'évanouissement des champs magnétiques ou pendant le temps d'établissement des champs magnétiques et **en ce que** la valeur moyenne est formée à partir des tensions de mesure générées par les signaux de mesure de conductivité et les tensions de mesure générées par les premiers signaux de correction.

9. Procédé selon l'une des revendications 6 à 8, une première période de génération de champ magnétique étant suivie d'une deuxième période de génération de champ magnétique, **caractérisé en ce que** des signaux de mesure de conductivité déphasés sont générés comme deuxièmes signaux de correction toutes les deux périodes, les signaux de mesure de conductivité déphasés étant compris comme étant des signaux de mesure de conductivité pour lesquels la polarité est inversée.

10. Procédé selon l'une des revendications 6 à 9, **caractérisé en ce que**, pendant le temps de mesure de débit, c'est à dire sans que les signaux de mesure de conductivité ne soient appliqués aux électrodes de mesure, des tensions de mesure sont prises sur les électrodes de mesure, à savoir deux tensions de mesure toutes les demi-périodes, **en ce que** la valeur moyenne est formée à partir des tensions de mesure d'une première demi-période et des tensions de mesure de la demi-période suivante et **en ce que** cette valeur de mesure moyenne est soustraite de la valeur de mesure effective, la valeur de mesure effective étant la valeur de mesure qui résulte de l'application des signaux de mesure de conductivité aux électrodes de mesure.
